# DEMANDE DE BREVET EUROPEEN

(11) **EP 2 589 519 A1**
(43) Date de publication de la demande: **08.05.2013**
(21) Numéro de dépôt: 12191359.4
(22) Date de dépôt: 06.11.2012
(51) Int. Cl.: B60T 3/00, B65G 69/00, B65G 69/34, B60P 3/077, B62B 1/02, B64F 1/16

(54) **Dispositif de calage d'une roue comportant des moyens de verrouillage en position de calage**

(30) Priorité: 07.11.2011 FR 1160107
(71) Demandeur: Serv Trayvou Interverrouillage, 93100 Montreuil (FR)
(72) Inventeur: Duchesne, Frédéric, 95740 Frépillon (FR)
(74) Mandataire: Martin, Franck-Olivier

(57) **Abrégé**

L'invention propose un dispositif (10) de calage d'une roue (16) qui comporte une cale (14) mobile qui est susceptible d'occuper une position de calage de la roue (16), la cale (14) comportant :
- une base (18) qui comporte une semelle (26) inférieure ;
- un sabot (17) qui est porté par la base (18) et dont une face de calage (44) est destinée à être appliquée contre une bande de roulement de la roue (16) ;
- des moyens (28, 30) d'agrippement de la base (18) au sol ; caractérisé en ce que le sabot (17) est monté libre en coulissement longitudinalement sur la base (18) entre une position arrière rétractée et une position avant de contact de la face de calage (44) avec la bande de roulement,

et en ce que la cale (14) comporte des moyens (58, 60, 56) commandés de mise en contrainte de la face de calage (44) contre la bande de roulement.

## Description

L'invention concerne un dispositif de calage d'une roue, par exemple d'une roue de remorque de camion.

L'invention concerne plus particulièrement un dispositif de calage d'une roue d'axe transversal, par exemple d'une remorque de camion, qui comporte une cale mobile qui est susceptible d'occuper une position de calage de la roue, la cale comportant :
- une base qui comporte une semelle inférieure par laquelle elle est susceptible d'être posée au sol longitudinalement derrière la roue à caler ;
- un sabot qui est porté par la base et dont une face de calage est destinée à être appliquée contre une bande de roulement de la roue ;
- des moyens d'agrippement de la base au sol afin d'interdire l'éloignement longitudinal de la base par rapport à la roue.

Un tel dispositif de calage est notamment utilisé pour assurer l'immobilisation d'une remorque de camion lors d'une opération de chargement ou de déchargement de marchandises.

En général, pour effectuer de telles opérations, la remorque est garée de manière que son ouverture soit accostée au bord d'un quai de livraison. Le plancher de la remorque et le quai sont agencés sensiblement de plain-pied l'un par rapport à l'autre. Ceci permet de livrer les marchandises plus facilement.

Pour éviter de mettre en danger les caristes et/ou les transporteurs, il est impératif de s'assurer que la remorque est parfaitement immobilisée avant le début des opérations. A cette fin, une cale est agencée sur au moins une roue de la remorque afin d'empêcher que la remorque ne roule en direction de la cale.

Pour être certain que l'opération d'immobilisation du camion ne soit pas shuntée, la cale est équipée d'un dispositif de verrouillage dans sa position de calage. Le dispositif de verrouillage comporte une clé prisonnière qui est libérée après l'opération de verrouillage de la cale. Cette même clé peut ensuite être utilisée pour déverrouiller une porte d'accès à un hangar de stockage de marchandises, ou encore une barrière d'accès au quai.

Un tel dispositif de transfert de clé est aussi connu sous le terme "dispositif d'interverrouillage". Le dispositif d'interverrouillage assure ainsi que l'opération de chargement/déchargement ne peut commencer la mise en place de la cale derrière à la roue de la remorque.

Cependant, les cales déjà connue sont susceptibles d'être verrouillées même lorsque la cale n'est pas agencée contre la roue du camion. Ceci est une source potentielle d'accident, car même si la clé est libérée, rien n'assure que la remorque du camion est bien immobilisée.

L'invention propose un dispositif de calage du type décrit précédemment, **caractérisé en ce que** le sabot est monté libre en coulissement longitudinalement sur la base entre une position arrière rétractée et une position avant de contact de la face de calage avec la bande de roulement,
et en ce que la cale comporte des moyens commandés de mise en contrainte de la face de calage contre la bande de roulement.

Selon d'autres caractéristiques de l'invention :
- les moyens de mise en contrainte comportent:
   - un organe compressible élastiquement qui est interposé entre le sabot et la base ;
   - des moyens commandés de serrage longitudinal de l'organe compressible ;
- les moyens de serrage sont formés par un mors qui est monté mobile longitudinalement sur la base entre une position arrière de repos dans laquelle l'organe compressible n'est pas serré, et une position extrême avant de serrage dans laquelle l'organe compressible est serré de manière à produire une contrainte d'écartement entre le sabot et la base ;
- le coulissement du mors est commandé au moyen d'un mécanisme irréversible ;
- le mors est porté par une bielle qui est entraînée par un mécanisme pivotant à cliquet, le cliquet étant débrayable au moyens d'une commande de débrayage ;
- la bielle est montée pivotante à l'extrémité inférieure d'un manche de commande formant levier ;
- le cliquet est porté par une extrémité inférieure du manche, le cliquet coopérant avec une crémaillère qui est fixé à la base ;
- des moyens de verrouillage de la commande de débrayage sont actionnables uniquement lorsque l'organe élastique exerce une contrainte supérieure à une valeur prédéterminée ;
- les moyens de verrouillage comportent une clé qui est destinée à faire pivoter une roue, un doigt de sécurité étant mobile entre une position de blocage dans laquelle il empêche la rotation de la roue pour maintenir la clé prisonnière, et une position de libération dans laquelle la clé est libre d'être tournée et vers laquelle il est commandé lorsque le mors est coulissé d'une distance prédéterminée par rapport au sabot pour mettre en pression l'organe compressible ;
- le doigt est rappelé élastiquement vers sa position de blocage ;
- le doigt est tiré vers sa position de libération par un câble qui passe par un élément de renvoi fixe par rapport au sabot, une première extrémité libre du câble étant fixe par rapport au mors ;
- la deuxième extrémité libre du câble est fixée directement au doigt ;
- un capteur de position du mors par rapport au sabot est susceptible d'émettre un signal électrique pour agir sur un actionneur de déplacement du doigt entre ses deux positions ;
- la base est munie de roulettes escamotables entre une position escamotée de manière que la base repose au sol par sa semelle et dans laquelle les moyens d'agrippement sont actifs, et une position déployée dans laquelle la semelle de la base est surélevée par rapport au sol et dans laquelle les moyens d'agrippement sont inactifs ;
- les roulettes permettent un roulement longitudinal de la base par rapport au sol lorsqu'elle sont déployées ;
- l'escamotage des roulettes est commandé par un manche formant levier qui agit sur au moins une came, un suiveur de came étant lié aux roulettes ;
- l'escamotage des roulettes et le coulissement du mors sont commandés par un manche commun, la came présentant une forme telle que les roulettes sont escamotées préalablement au serrage de l'organe compressible ;
   - les moyens d'agrippement comportent:
      - des crans qui sont réalisés dans le sol ;
      - des griffes qui sont agencées sous la semelle de la base et qui sont destinées à coopérer avec les crans pour immobiliser longitudinalement la base dans au moins une direction opposée à la contrainte d'écartement susceptible d'être exercée par l'organe compressible.

D'autres caractéristiques et avantages apparaîtront à la lecture de la description détaillée qui va suivre pour la compréhension de laquelle on se reportera aux dessins annexés parmi lesquels :
- la figure 1 est une vue en perspective qui représente le dispositif de calage réalisé selon les enseignements de l'invention qui est en position de calage d'une roue ;
- la figure 2 est une vue de côté qui représente la cale du dispositif de la figure 1 dans une position de calage derrière une roue ;
- la figure 3 est une vue similaire à celle de la figure 2 dans laquelle un sabot de la cale est contraint contre la bande de roulement de la roue ;

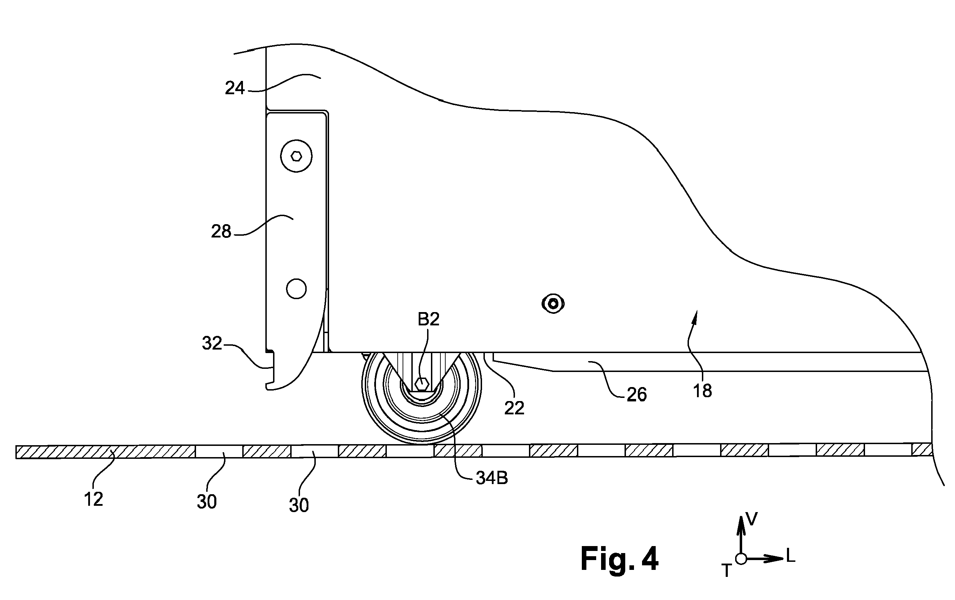

- la figure 4 est une vue de détail à plus grande échelle de la cale de la figure 1 représentant des moyens d'agrippement au sol ;

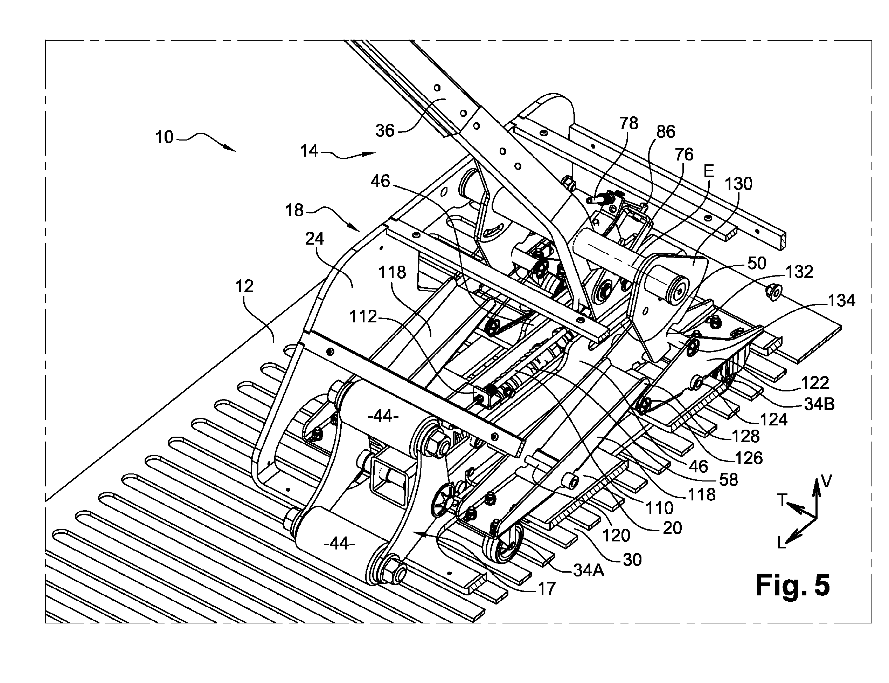

- la figure 5 est une vue en perspective avec arraché représentant l'intérieur d'une base de la cale dans laquelle un flanc du carter a été arraché pour permettre de distinguer le contenu de la base ;
- la figure 6 est une vue de côté avec arraché qui représente l'intérieur du carter ;
- la figure 7 est une vue en perspective qui représente un sabot de la cale ;

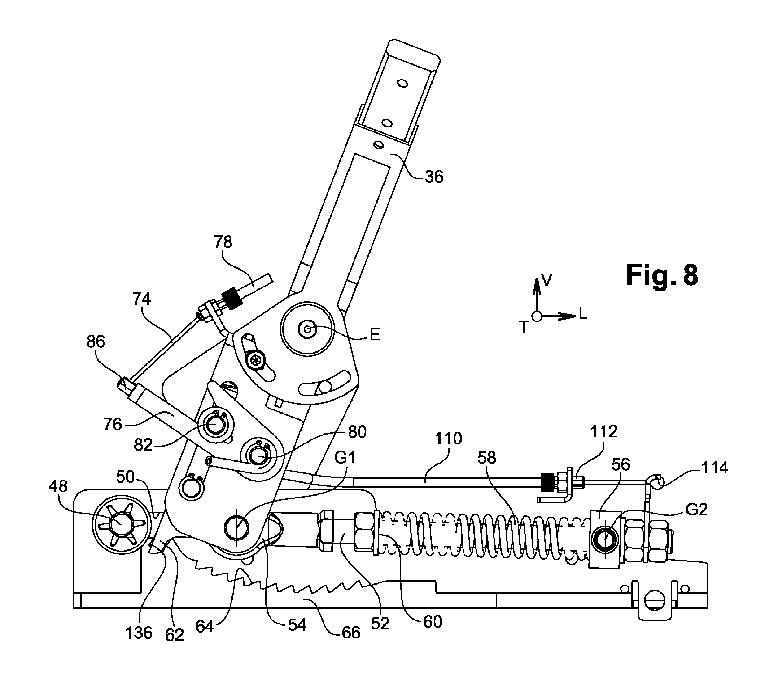

- la figure 8 est une vue de côté qui représente des moyens de mise en contrainte du sabot contre la bande de roulement de la roue ;

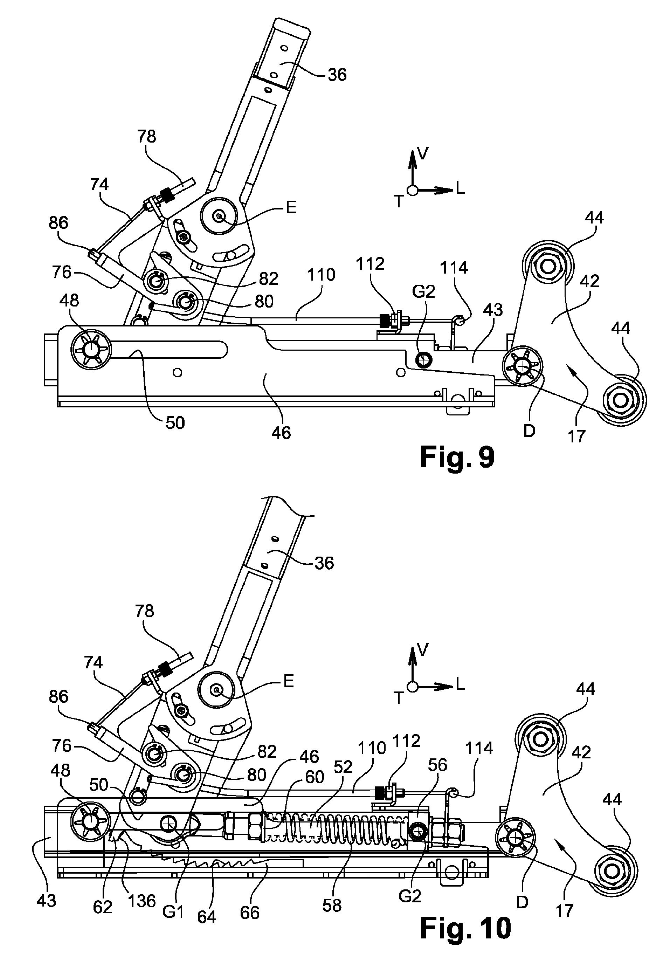

- la figure 9 est une vue de côté similaire à celle de la figure 8 dans laquelle le sabot est monté coulissant dans les moyens de mise en contrainte ;
- la figure 10 est une vue similaire à celle de la figure 9 dans laquelle un rail latéral et le bras de guidage en coulissement du sabot ont été représentés en transparence pour permettre de voir l'intérieur des moyens de mise en contrainte ;
- la figure 11 est une vue en perspective éclatée qui représente des moyens de verrouillage de la cale dans sa position de calage ;
- la figure 12 est une vue de face qui représente les moyens de verrouillage dans une première position de libération ;
- la figure 13 est une vue similaire à celle de la figure 12 dans laquelle les moyens de verrouillage sont dans une position de verrouillage ;
- la figure 14 est une vue de côté avec arraché qui représente des roulettes escamotables en position escamotée ;
- la figure 15 est une vue similaire à celle de la figure 14 dans laquelle les roulettes escamotables ont été représentées en position déployée.

Dans la suite de la description, on adoptera à titre non limitatif des orientations longitudinale "L", verticale "V" et transversale "T" indiquées par le trièdre "L,V,T" des figures.

Dans la suite de la description des éléments présentant une structure identique ou des fonctions analogues seront désignés par des mêmes numéros de référence.

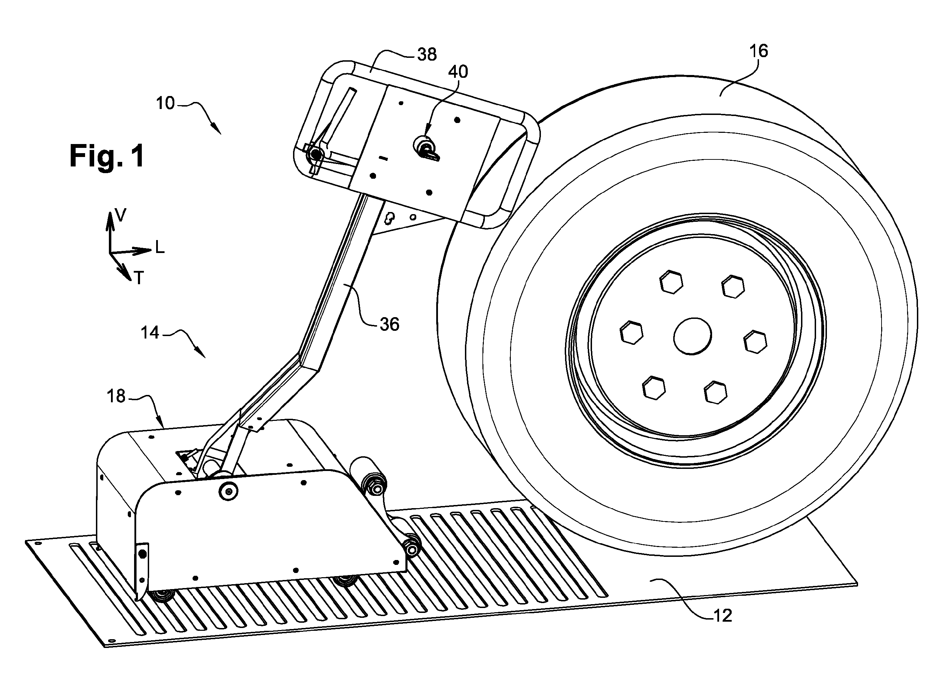

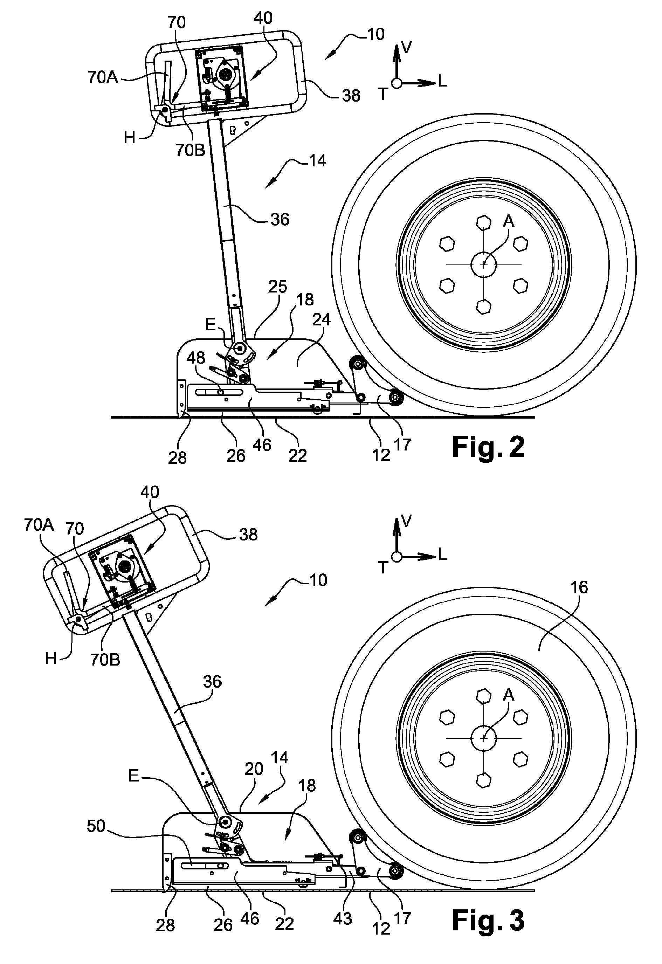

On a représenté aux figures 1 à 3 un dispositif 10 de calage qui comporte une plaque 12 de sol et une cale 14 mobile qui est posée sur la plaque 12 de sol.

Le dispositif 10 de calage est agencé contre une roue 16 d'axe "A" transversal de manière à empêcher la roue 16 de rouler longitudinalement vers l'arrière par application d'un sabot 17 avant de la cale 14 contre une bande de roulement de la roue 16.

La cale 14 comporte une base 18 qui est formée par un carter 20. Le carter 20 comporte une paroi 22 inférieure et deux flancs 24 latéraux dont chacun s'étend dans un plan vertical longitudinal. Le carter 20 est fermé par un capot 25 supérieur qui est représenté à la figure 1.

Une semelle 26 est fixée sous la face inférieure de la paroi 22 inférieure du carter 20. La semelle 26 est destinée à être posée directement sur la plaque 12 de sol. La semelle 26 est ici formée par deux skis longitudinaux pour faciliter le coulissement longitudinal de la base 18 sur la plaque 12 de sol lors de la mise en place ou du retrait de la cale 14, comme cela sera expliqué plus en détails par la suite.

Le carter 20 comporte aussi des moyens d'agrippement de la base 18 à la plaque 12 de sol afin d'interdire l'éloignement longitudinal de la base 18 par rapport à la roue 16. Les moyens d'agrippement sont ici formés par deux griffes 28 qui sont agencées à l'arrière du carter 20, latéralement de part et d'autre de la paroi 22 inférieure. Chaque griffe 28 s'étend verticalement vers le bas en saillie par rapport à la semelle 26.

La plaque 12 de sol comporte des crans 30 qui sont destinés à recevoir au moins une griffe 28. Chaque cran 30 est ici formé par une fente transversale qui traverse verticalement la plaque 12 de sol.

L'extrémité inférieure de chaque griffe 28 présente une forme de crochet 32 qui est destinée à venir accrocher la plaque 12 de sol longitudinalement vers l'arrière afin d'empêcher tout soulèvement du carter 20 par rapport à la plaque 12 de sol lorsque le carter 20 est poussé longitudinalement vers l'arrière par rapport à la plaque 12 de sol. Les griffes 28 peuvent ainsi occuper une position active dans laquelle elles sont insérées dans un cran 30 de la plaque 12 de sol, et une position inactive dans laquelle les griffes 28 sont au-dessus de la plaque 12 de sol de manière à ne plus être insérées dans les crans 30.

Pour permettre le déplacement de la cale 14, cette dernière est équipée de deux roulettes avant 34A et de deux roulettes arrière 34B. La cale 14 est ainsi mobile à la manière d'un chariot.

Les quatre roulettes 34A, 34B sont montées escamotables entre une position escamotée à l'intérieur du carter 20 de manière que la base 18 repose sur la plaque 12 de sol par sa semelle 26 et dans laquelle les moyens d'agrippement 28, 30 sont actifs, et une position déployée dans laquelle la semelle 26 de la base 18 est surélevée par rapport à la plaque 12 de sol et dans laquelle les moyens d'agrippement 28, 30 sont inactifs.

Les roulettes arrière 34B sont montées rotatives autour d'un n axe "B2" transversal fixe de manière à permettre un déplacement longitudinal de la cale 14 par roulement, tandis que les roulettes avant 34A sont montées en rotation autour d'un axe "B1" de roulement et folles en rotation autour d'un axe "C" vertical pour permettre de faire tourner la cale 14 lors de ses déplacements.

La cale 14 comporte aussi un manche 36 qui s'étend vers le haut depuis la base 18. Le manche 36 comporte à son extrémité supérieure une poignée 38 qui permet à un opérateur de déplacer la cale 14 sans avoir à se pencher.

Le manche 36 comporte aussi des moyens (non représentés) pour avertir le conducteur d'un camion de la mise en place de la cale 14 derrière l'une des roues 16 de sa remorque.

Le manche 36 comporte en outre des moyens 40 de verrouillage de la cale 14 dans une position de calage de la roue 16. Ces moyens 40 de verrouillage seront détaillés par la suite.

Le sabot 17 est porté par la base 18. Le sabot 17 est plus particulièrement monté libre en coulissement longitudinalement sur la base 18 entre une position arrière rétractée et une position avant de contact avec la bande de roulement. Comme représenté aux figures, le sabot 17 est agencé à l'avant de la base 18.

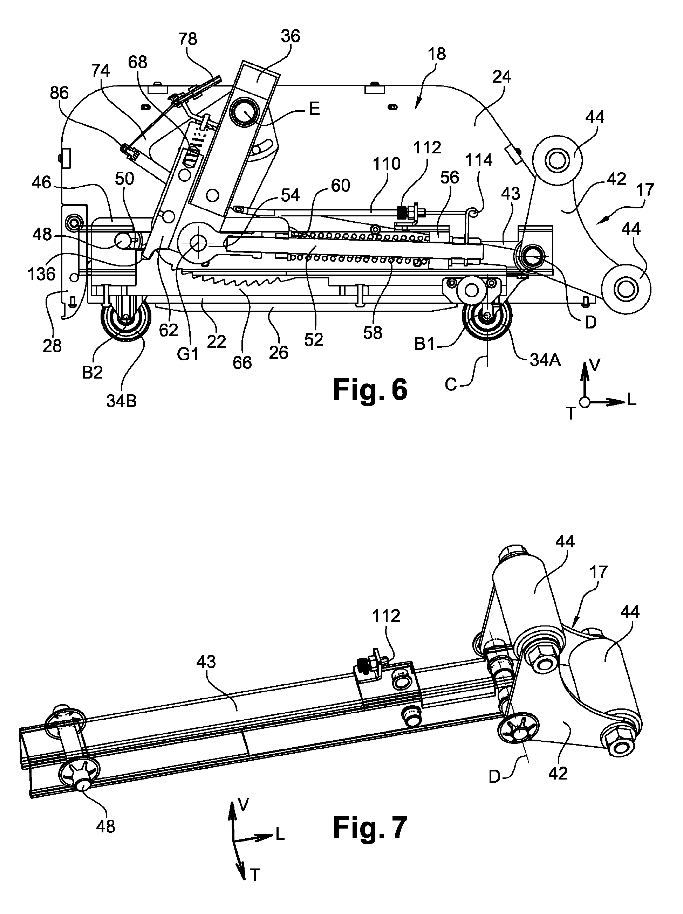

On a représenté plus en détail le sabot 17 à la figure 7. Le sabot 17 est formé par un palonnier 42 qui est monté pivotant autour d'un axe "D" transversal à l'extrémité avant libre d'un bras 43 longitudinal. Le sabot 17 présente une face avant de calage qui est conformée de manière à épouser la bande de roulement de la roue 16.

La face de calage est ici formée par deux galets 44 de roulement qui sont montés rotatifs chaque extrémité inférieure et supérieure du palonnier 42 autour d'un axe transversal.

Le pivotement du palonnier 42 et les deux galets 44 permettent notamment de faciliter la mise en position de la cale 14, notamment lors de l'escamotage des roulettes 34A, 34B. En outre, les galets 44 permettent aussi de faciliter le retrait de la cale 14 lors du déploiement des roulettes 34A, 34B.

Le bras 43 du sabot 17 est destiné à être monté coulissant longitudinalement sur la paroi 22 inférieure, à l'intérieur du carter 20, afin de guider le mouvement de coulissement du sabot 17. A cet effet, le bras 43 est reçu entre deux rails 46 de guidage longitudinaux latéraux qui délimitent transversalement une glissière dans laquelle coulisse le bras 43.

Pour empêcher le soulèvement du bras 43 par rapport au carter 20, ce dernier comporte à son extrémité arrière deux tourillons 48 latéraux qui s'étendent transversalement vers l'extérieur du bras 43. Chaque tourillon 48 est reçu dans une lumière 50 de guidage longitudinale qui est formée dans chacun des bras 43.

La lumière 50 de guidage permet aussi de limiter le coulissement longitudinal du bras 43 dans les deux sens par butée des tourillons 48 contre chacune des extrémités longitudinale de la lumière 50.

Le coulissement du sabot 17 est commandé par le pivotement du manche 36. A cet effet, le tronçon inférieur du manche 36 est monté pivotant sur le carter 20 autour d'un axe "E" transversal par l'intermédiaire d'un arbre transversal qui est reçu dans deux orifices en vis-à-vis des flancs 24 du carter 20. L'axe "E" de pivotement du manche 36 est ainsi contenu à l'intérieur du carter 20, au-dessus d'un tronçon arrière du bras 43 du sabot 17.

La cale 14 comporte des moyens 58, 60, 56 commandés de mise en contrainte de la face de calage 44 contre la bande de roulement de manière à produire une contrainte d'écartement entre le sabot 17 et la base 18 cette contrainte s'appliquant en réaction entre la bande de roulement et le sol.

Une extrémité inférieure du manche 36, agencée dans une cavité du bras 43 du sabot 17, est liée à un tronçon avant du bras 43 par l'intermédiaire d'une bielle 52 d'entraînement d'axe sensiblement longitudinal. La bielle 52 comporte une extrémité arrière 54 qui est montée pivotante autour d'un axe "G1" transversal à l'extrémité inférieur du manche 36, au-dessous de l'axe "E" de pivotement du manche 36, tandis qu'un tronçon d'extrémité avant de la bielle 52 porte une bague 56 coulissante.

Le pivotement du manche 36 en tirant la poignée 38 vers l'arrière entraîne ainsi la bielle 52 vers l'avant.

La bague 56 coulissante montée pivotante autour d'un axe "G2" transversal par le bras 43, tandis qu'elle est liée en coulissement longitudinal avec le bras 43.

Un organe 58 compressible élastiquement, qui est ici formé par un ressort hélicoïdal, est interposé longitudinalement entre la bague 56 et un mors 60 qui est fixe par rapport à la bielle 52.

En variante, l'organe compressible élastiquement est formé par un vérin contenant un gaz compressible.

Le mors 60 forme un moyen de serrage de l'organe 58 compressible. Le mors 60 est ainsi monté mobile longitudinalement sur la base 18 entre une position arrière de repos dans laquelle l'organe 58 compressible n'est pas serré, et une position extrême avant de serrage dans laquelle l'organe 58 compressible est susceptible d'être serré longitudinalement lorsque le sabot 17 est bloqué par la roue 16 de manière à produire une contrainte d'écartement longitudinale entre le sabot 17 et la base 18.

Le bras 43 et la bielle 52 présentent une course longitudinale sensiblement identique. Ainsi, lorsque le sabot 17 n'est pas appliqué contre la bande de roulement d'une roue 16, le mors 60 déplace le sabot 17 sans provoquer le serrage de l'organe 58 compressible. A cet effet, la raideur de l'organe 58 compressible est très supérieure à la force de résistance au coulissement du bras 43 dans le carter 20.

Ceci permet notamment d'approcher le sabot 17 jusqu'à la roue 16 lorsque la base 18 est posée à distance de la roue 16. L'organe 58 compressible élastiquement est ainsi destiné à mettre en contrainte la face de calage du sabot 17 uniquement lorsque le sabot 17 est appliqué contre la bande de roulement de la roue 16.

Afin de faciliter le serrage de l'organe 58 compressible, le coulissement du mors 60 est commandé au moyen d'un mécanisme irréversible. Le mécanisme irréversible est ici un mécanisme pivotant à cliquet.

Plus particulièrement, l'extrémité inférieure du manche 36 comporte un cliquet 62 qui est monté mobile entre une position active vers laquelle il est rappelé élastiquement, et une position inactive vers laquelle il est commandé par un mécanisme de débrayage qui sera détaillé par la suite.

Dans sa position active, le cliquet 62 fait saillie vers le bas de manière à être encliqueté avec les encoches 64 d'une crémaillère 66 qui est fixée sur la paroi 22 inférieure du carter 20. Les encoches 64 sont conçues de manière que l'encliquetage avec le cliquet 62 autorise un pivotement du manche 36 dans le sens de serrage de l'organe 58 compressible, tandis que le pivotement du manche 36 dans un sens opposé de desserrage soit interdit si l'on actionne pas le mécanisme de débrayage. Ainsi, seul le serrage de l'organe 58 compressible est autorisé par défaut.

Le cliquet 62 est ici une barre d'axe parallèle à l'axe du manche 36 qui présente une extrémité inférieure libre qui coopère avec la crémaillère 66, et qui présente une extrémité supérieure qui est poussée élastiquement vers sa position active inférieure par un ressort 68.

Le mécanisme de débrayage est commandé par une manette 70 qui est agencée sur la poignée 38 supérieure du manche 36. La manette 70 se présente comme un levier en forme de "L" qui est monté pivotant autour d'un axe transversal "H" qui divise la manette 70 en deux bras 70A, 70B. Un bras 70A de préhension arrière vertical forme la partie de préhension de la manette 70, tandis que le bras 70B d'actionnement horizontal avant forme une partie d'actionnement du cliquet 62.

La manette 70 est actionnable entre une position d'embrayage correspondant à la position active du cliquet 62, et vers laquelle la manette 70 est rappelée élastiquement, ici par un ressort 72, et une position de débrayage correspondant à la position inactive du cliquet 62.

Un premier câble 74 est relie le bras 70B d'actionnement de la manette 70 avec le cliquet 62, par l'intermédiaire d'une biellette 76. Le câble 74 est agencé dans une gaine 78 qui passe à l'intérieur du manche 36.

Une première extrémité de la biellette 76 est plus particulièrement montée pivotante à l'extrémité inférieure du manche 36 autour d'un premier axe 80 transversal, tandis que la biellette 76 est montée rotative sur le cliquet 62 autour d'un deuxième axe 82 transversal passant par le milieu de la biellette 76.

Ainsi, le pivotement de la biellette 76 dans un sens horaire permet de tirer le cliquet 62 vers sa position inactive.

Le premier câble 74 est relié par une extrémité 84 supérieure au bras 70B d'actionnement de la manette 70, tandis que son extrémité 86 inférieure est reliée à la deuxième extrémité libre de la biellette 76. La gaine 78 est fixée par ses deux extrémités au manche 36.

Ainsi, lorsqu'un utilisateur actionne la manette 70, le premier câble 74 est tiré, exerçant ainsi un effort de tirage sur le cliquet 62 via la biellette 76, et provoquant le tirage du cliquet 62 vers sa position inactive.

Le manche 36 peut alors être pivoté librement dans un sens de desserrage.

La cale 14 comporte en outre les moyens 40 de verrouillage de la commande de débrayage qui sont actionnables uniquement lorsque l'organe 58 compressible exerce une contrainte supérieure à une valeur prédéterminée.

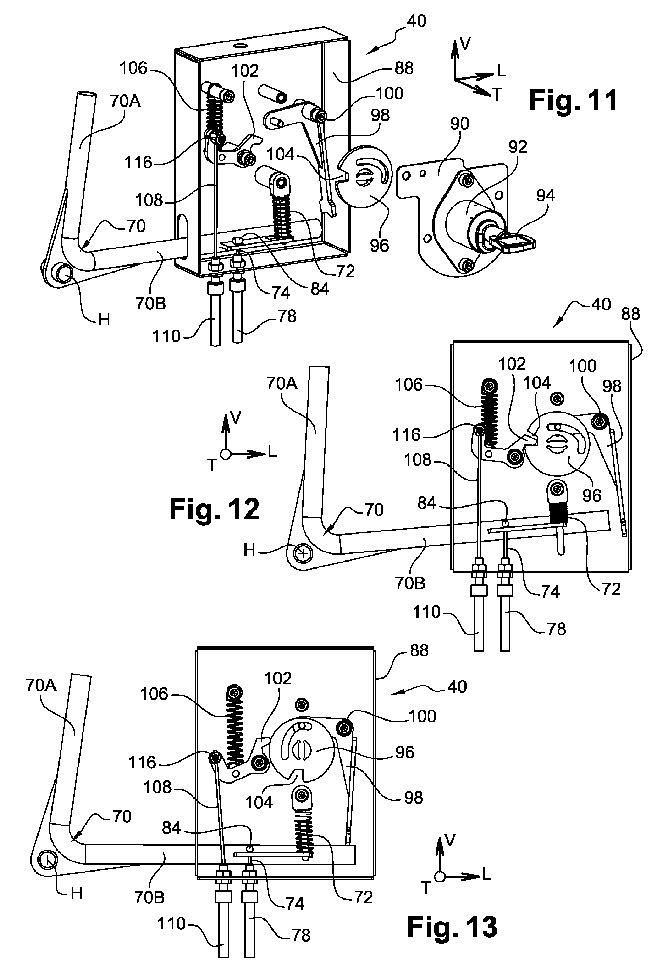

Comme représenté aux figures 11 à 13, les moyens 40 de verrouillage comportent une serrure qui est agencé sur la poignée 38 du manche 36. La serrure comporte notamment un boîtier 88 comportant une platine 90 verticale longitudinale. Un couvercle latéral (non représenté) du boîtier 88 est muni d'un barillet 92 destiné à recevoir une clé 94 selon une direction transversale.

Une came 96 verticale de verrouillage est montée pivotante sur la platine 90 autour d'un axe transversal. La came 96 de verrouillage est susceptible d'être pivotée par pivotement de la clé 94 dans le barillet 92 entre une position de libération dans laquelle la clé 94 est prisonnière de la serrure et une position de verrouillage dans laquelle la clé 94 est libre d'être retirée de la serrure.

La came 96 de verrouillage commande le pivotement d'un levier 98 de verrouillage autour d'un axe 100 transversal. A cet effet, le levier 98 de verrouillage comporte à une extrémité supérieure un doigt qui coopère avec une fente formant le chemin de came de la came 96 de verrouillage.

Le levier 98 de verrouillage est aussi agencé à l'intérieur du boîtier 88. Le levier 98 de verrouillage pivote entre une position de libération, correspondant à la position de libération de la serrure, dans laquelle la manette 70 est libre d'être actionnée entre ses deux positions, et une position de verrouillage, correspondant à la position de verrouillage de la serrure, dans laquelle l'extrémité inférieure du levier 98 bloque la manette 70 dans sa position d'embrayage.

La contrainte exercée par l'organe 58 compressible est déterminée en fonction du coulissement relatif du mors 60, donc de la bielle 52, par rapport au sabot 17.

La serrure comporte ainsi des moyens commandés de sécurité qui sont commandés entre une position de blocage dans laquelle ils bloquent la rotation de la came 96 de verrouillage pour maintenir la clé 94 prisonnière, et une position de libération dans laquelle la clé 94 est libre d'être tournée et vers laquelle ils sont commandés lorsque le mors 60 est coulissé d'une distance prédéterminée par rapport au sabot 17 pour mettre en pression l'organe 58 compressible.

Les moyens de sécurité comportent ici un doigt 102 de sécurité qui est monté dans le boîtier 88 pivotant entre :
- la position de blocage dans laquelle il est inséré dans un cran 104 de la came 96 de verrouillage pour immobiliser le pivotement de la came 96 de verrouillage dans les deux sens, et vers laquelle il est rappelé élastiquement par un ressort 106 ;
- la position de libération dans laquelle le doigt 102 est sorti de son cran 104 pour autoriser la rotation de la came 96 de verrouillage.

Le doigt 102 est tiré vers sa position de libération par un deuxième câble 108. Le deuxième câble 108 est inséré dans une gaine 110 dont une extrémité 112 inférieure est fixée au bras 43 du sabot 17, l'extrémité 112 inférieure de la gaine 110 formant un élément de renvoi fixe par rapport au sabot 17. Une première extrémité 114 inférieure libre du deuxième câble 108 est fixée à la bielle 52, longitudinalement en avant de l'élément de renvoi fixe 112.

La deuxième extrémité libre 116 du deuxième câble 108 est fixée directement au doigt 102 de manière qu'une traction sur l'extrémité 114 inférieure du deuxième câble 108 se traduise par un pivotement du doigt 102 de sécurité vers sa position de libération.

La bielle 52 étant solidaire en déplacement longitudinal avec le mors 60, lorsque la bielle 52 coulisse d'une distance prédéterminée par rapport au bras 43, le deuxième câble 108 est tiré sur une course de traction correspondante. La course de traction du deuxième câble 108 est suffisante pour permettre au doigt 102 de sécurité d'être tiré vers sa position de libération permettant l'actionnement de la clé 94.

Selon une variante non représentée de l'invention, un capteur de position du mors par rapport au sabot est agencé dans la cale. Ce capteur est susceptible d'émettre un signal électrique, via un fil ou via des ondes électromagnétiques, pour agir sur un actionneur de déplacement du doigt de sécurité entre ses deux positions.

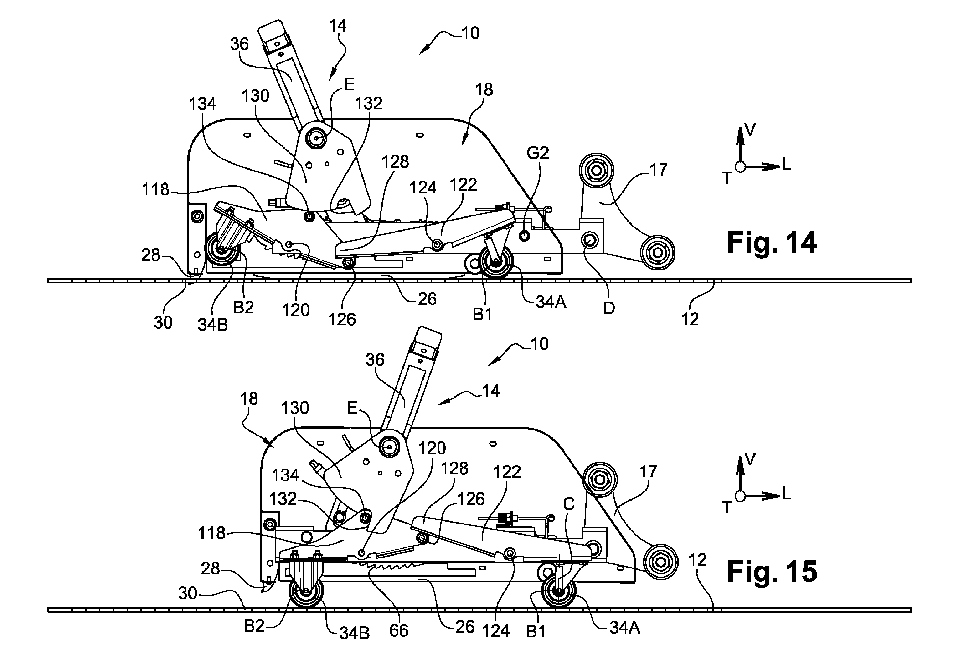

On décrit à présent le mécanisme d'escamotage des roulettes 34A, 34B en référence aux figures 14 et 15.

La cale 14 comporte plus particulièrement deux roulettes arrière 34B et deux roulettes avant 34A qui sont agencées à chaque coin de la base 18.

Les roulettes avant 34A et arrière 34B du côté droit présentent une structure et un agencement identiques aux roulettes avant 34A et arrière 34B du côté gauche. Seules les roulettes avant 34A et arrière 34B droite seront décrite par la suite, la description étant applicables aux roulettes avant 34A et arrière 34B gauche.

La roulette arrière 34B est montée sous l'extrémité arrière d'une barre 118 longitudinale arrière. Ladite barre 118 arrière est montée basculante autour d'un axe 120 transversal passant sensiblement au milieu de la barre 118 arrière. La barre 118 arrière est ainsi susceptible de pivoter :
- dans un sens horaire correspondant à un sens d'escamotage de la roulette arrière 34B ; ou
- dans un sens anti-horaire correspondant à un sens de déploiement de la roulette arrière 34B.

De même, la roulette avant 34A est montée sous l'extrémité avant d'une barre 122 longitudinale avant. Ladite barre 122 avant est montée basculante autour d'un axe 124 transversal passant sensiblement au milieu de la barre 122 avant. La barre 122 avant est ainsi susceptible de pivoter :
- dans un sens anti-horaire correspondant à un sens d'escamotage de la roulette avant 34A ; ou
- dans un sens horaire correspondant à un sens de déploiement de la roulette avant 34A.

L'extrémité avant 126 de la barre 118 arrière est susceptible d'appuyer sous l'extrémité arrière 128 de la barre 122 avant afin de la soulever. Ceci permet de faire pivoter la barre 122 avant dans un sens horaire lorsque la barre 118 arrière pivote dans un sens anti-horaire. Ce sens de rotation des deux barres 118, 122 provoque le déploiement des roulettes 34A, 34B à l'extérieur du carter 20 en abaissant les extrémités portant les roulettes 34A, 34B.

De même, lorsque l'extrémité 126 avant de la barre 118 arrière est baissée, l'extrémité 128 arrière de la barre 122 avant est également baissée par le poids de la cale 14.

Ainsi, les deux barres 118, 122 basculent simultanément dans un sens de déploiement ou dans un sens d'escamotage.

Le mouvement de basculement des roulettes 34A, 34B est commandé dans les deux sens par une came 130 qui est montée solidaire en pivotement avec l'extrémité inférieure du manche 36.

La came 130 présente un chemin de came qui comporte à son extrémité avant une butée 132 qui est destinée à appuyer contre un suiveur de came 134 de la barre 118 arrière. Ce suiveur de came 134 est agencé de manière excentré par rapport à l'axe de pivotement de la barre 118 arrière de manière que, lors d'un pivotement dans un sens horaire du manche 36, la butée 132 tire le suiveur de came 134 pour entraîner la barre 118 arrière en basculement dans un sens de déploiement des roulettes 34A, 34B. La barre 118 arrière entraîne ainsi la barre 122 avant dans un sens de déploiement des roulettes 34A, 34B de manière que les roulettes avant 34A et arrière 34B soient déployées.

La crémaillère 66 comporte en outre un cran 136 d'immobilisation du pivotement dans les deux sens par encliquètement du cliquet 62. Ceci permet d'immobiliser le manche 36 par rapport à la base 18 lorsque les roulettes 34A, 34B sont déployées. Le déplacement de la base 18 est ainsi facilité.

Le basculement des barres 118, 122 dans un sens d'escamotage des roulettes 34A, 34B est commandé par un chemin de came qui s'étend en arrière de la butée 132. La came 130 appuie ainsi sur le suiveur de came 134 pour faire basculer les barres 118, 122 de manière à escamoter les roulettes 34A, 34B à l'intérieur du carter 20.

L'escamotage des roulettes 34A, 34B et le coulissement du mors 60 sont ainsi commandés par un manche 36 commun. La came 130 présente une forme telle que les roulettes 34A, 34B sont escamotées préalablement à la mise sous tension de l'organe 58 compressible.

Le fonctionnement du dispositif 10 de calage est à présent décrit lorsqu'une roue 16, par exemple la roue 16 d'une remorque de camion, doit être calée pour empêcher la roue 16 de rouler longitudinalement vers l'arrière.

La roue 16 à caler est mise en place sur la plaque 12 de sol. Ceci permet de bloquer fermement la plaque 12 de sol longitudinalement par rapport à la roue 16.

En variante, la plaque 12 de sol est fixée solidement au sol.

Puis la cale 14 est conduite par un opérateur, par roulement sur les roulettes 34A, 34B, jusqu'à ce que le sabot 17 soit positionné longitudinalement en contact avec l'arrière de la bande de roulement de la roue 16.

Le sabot 17 est en contact avec la bande de roulement au-dessous du diamètre de la roue 16 qui est parallèle au sol. Ceci permet notamment de plaquer la semelle 26 au sol par effet de coincement du sabot 17 sous la bande de roulement.

Le cliquet 62 est alors encliqueté dans son cran 136 d'immobilisation.

L'opérateur actionne la manette 70 vers sa position de débrayage. Cette opération lui permet de faire pivoter le manche 36 dans un sens anti-horaire. Ceci provoque deux effets simultanés.

Le premier effet est l'escamotage des roulettes 34A, 34B vers leur position escamotée. Ceci provoque un abaissement de la base 18 jusqu'à ce que sa semelle 26 soit posée au sol.

La base 18 est alors posé sur au sol par sa semelle 26 longitudinalement en arrière de la roue 16 de manière que le sabot 17 est interposé longitudinalement entre la base 18 et la roue 16.

Lors de l'abaissement de la base 18, le sabot 17 a tendance à s'écarter de la bande de roulement du fait de la courbure de la roue 16.

Le deuxième effet est un coulissement du sabot 17 vers l'avant. En effet, tant que le sabot 17 n'est pas appuyé fermement contre la bande de roulement, l'organe 58 compressible n'est pas serré. Il pousse simplement le sabot 17 vers la bande de roulement sans accumuler d'énergie.

Ce mouvement combiné d'avancement longitudinal du sabot 17 vers la bande de roulement et d'abaissement du sabot 17 par escamotage des roulettes 34A, 34B est facilité par les galets 44 de roulement du sabot 17. Ceci évite au sabot 17 d'adhérer à la bande de roulement en bloquant la base 18 dans une position instable.

Les griffes 28 pénètrent alors dans les crans 30 de la plaque 12 de sol.

Si les griffes 28 ne coïncident pas avec un cran 30, la semelle 26 glisse vers l'arrière sur le sol, en réaction au poids de la cale 14 et à la poussée du sabot 17 contre la bande de roulement, jusqu'à ce que les griffes 28 pénètrent dans un cran 30.

Le glissement de la base 18 au sol peut à nouveau être compensé par le coulissement du sabot 17 en faisant pivoter un peu plus le manche 36.

L'opérateur peut alors relâcher la manette 70 vers sa position d'embrayage avant d'entamer une opération de mise sous contrainte de la cale 14.

L'opérateur continue à faire pivoter le manche 36 dans un sens anti-horaire afin de serrer l'organe 58 compressible entre le mors 60 et le sabot 17.

La coopération du cliquet 62 avec la crémaillère 66 permet à l'opérateur d'effectuer le serrage en plusieurs poussées sur la poignée 38.

Du fait de la démultiplication de la force provoquée par l'effet de levier du manche 36, la contrainte d'écartement exercée entre la base 18 et le sabot 17 est extrêmement élevée. Cette contrainte s'applique en réaction entre la bande de roulement et le sol.

L'organe 58 compressible exerce alors une force longitudinale très élevée sur le sabot 17 qui est ainsi fermement appuyé sur la bade de roulement. L'effort longitudinal en réaction est appliqué par les griffes 28 sur la plaque 12 de sol.

La courbure de la bande de roulement plaque très fermement la base 18 contre le sol, empêchant ainsi tout retrait de la cale 14 tant que l'organe 58 compressible exerce une contrainte élevée.

Lorsque le déplacement du mors 60 par rapport au sabot 17 est suffisant, la clé 94 peut être actionnée vers sa position de verrouillage, bloquant ainsi toute possibilité d'actionner la manette 70 vers sa position de débrayage.

La clé 94 peut ensuite être utilisée pour ouvrir la porte d'un hangar de stockage de marchandise. La clé 94 était jusqu'à présent prisonnière dans la serrure, ce qui interdisait toute opération de chargement/déchargement jusqu'à ce que la cale 14 soit positionnée derrière la roue 16 et mise sous contrainte.

Lorsque les opérations de chargement ou de déchargement sont terminées, la clé 94 est introduite dans la serrure. Puis la clé 94 est tournée vers sa position de libération. Ceci permet d'actionner la manette 70 vers sa position de débrayage.

L'organe 58 compressible exerce alors un effort sur le mors 60 qui coulisse vers l'arrière, entraînant le pivotement du manche 36 dans un sens horaire.

Lorsque l'organe 58 compressible est dans son état de repos, l'opérateur fournit l'effort nécessaire pour continuer le pivotement du manche 36 jusqu'à ce que le cliquet 62 soit dans son cran 136 d'immobilisation.

Le décrochement des griffes 28 par rapport à la plaque 12 de sol peut nécessiter de faire coulisser la base 18 longitudinalement vers l'avant par rapport au sol lors du déploiement des roulettes 34A, 34B. Cette opération est possible du fait que le sabot 17 est coulissé vers l'arrière par rapport à la bande de roulement, et du fait de la présence des skis formant semelle 26.

Le dispositif 10 de calage réalisé selon les enseignements de l'invention est particulièrement sûr car il est très difficile de libérer la clé 94 sans que le dispositif 10 de calage ne soit en position derrière une roue 16.

En effet, lorsque le manche 36 est pivoté dans un sens anti-horaire à vide, le sabot 17 coulisse sans que l'organe 58 compressible ne soit serré. La clé 94 demeure donc prisonnière lorsqu'aucune roue 16 n'est bloquée.

Même en imaginant actionner la cale 14 en bloquant le sabot 17 contre un mur, en l'absence des crans 30 de la plaque 12 de sol, l'organe 58 compressible ne peut pas être serré car la base 18 glisserait au sol avant que la contrainte ne soit suffisante pour libérer la clé 94.

Ainsi, le dispositif 10 de calage permet d'obtenir un moyen efficace de caler une roue 16 et d'assurer qu'aucune opération de chargement/déchargement ne puisse avoir lieu avant que la roue 16 n'ait été calée.

## Revendications

**1.** Dispositif (10) de calage d'une roue (16) d'axe transversal, par exemple d'une remorque de camion, qui comporte une cale (14) mobile qui est susceptible d'occuper une position de calage de la roue (16), la cale (14) comportant :
- une base (18) qui comporte une semelle (26) inférieure par laquelle elle est susceptible d'être posée au sol longitudinalement derrière la roue (16) à caler ;
- un sabot (17) avant qui est porté par la base (18) et dont une face de calage (44) est destinée à être appliquée contre une bande de roulement de la roue (16) ;
- des moyens (28, 30) d'agrippement de la base (18) au sol afin d'interdire l'éloignement longitudinal de la base (18) par rapport à la roue (16) ;
**caractérisé en ce que** le sabot (17) est monté libre en coulissement longitudinalement sur la base (18) entre une position arrière rétractée et une position avant de contact de la face de calage (44) avec la bande de roulement,
et **en ce que** la cale (14) comporte des moyens (58, 60, 56) commandés de mise en contrainte de la face de calage (44) contre la bande de roulement de manière à produire une contrainte d'écartement entre le sabot (17) et la base (18), cette contrainte s'appliquant en réaction entre la bande de roulement et le sol. 2. Dispositif (10) selon la revendication précédente, **caractérisé en ce que** la courbure de la bande de roulement plaque très fermement la base 18 contre le sol, empêchant ainsi tout retrait de la cale 14 tant que les moyens (58, 60, 56) commandés de mise en contrainte exercent une contrainte élevée entre la bande de roulement et le sol.

**3.** Dispositif (10) selon la revendication précédente, **caractérisé en ce que** les moyens de mise en contrainte comportent :
- un organe (58) compressible élastiquement qui est interposé entre le sabot (17) et la base (18) ;
- des moyens (56, 60) commandés de serrage longitudinal de l'organe (58) compressible.

**4.** Dispositif (10) selon la revendication précédente, **caractérisé en ce que** les moyens de serrage sont formés par un mors (60) qui est monté mobile longitudinalement sur la base (18) entre une position arrière de repos dans laquelle l'organe (58) compressible n'est pas serré, et une position extrême avant de serrage dans laquelle l'organe (58) compressible est serré de manière à produire une contrainte d'écartement entre le sabot (17) et la base (18).

**5.** Dispositif (10) selon la revendication précédente, **caractérisé en ce que** le coulissement du mors (60) est commandé au moyen d'un mécanisme (66, 62) irréversible.

**6.** Dispositif (10) selon la revendication précédente, **caractérisé en ce que** le mors (60) est porté par une bielle (52) qui est entraînée par un mécanisme pivotant à cliquet (62), le cliquet (62) étant débrayable au moyens d'une commande de débrayage.

**7.** Dispositif (10) selon la revendication précédente, **caractérisé en ce que** la bielle (52) est montée pivotante à l'extrémité inférieure d'un manche (36) de commande formant levier.

**8.** Dispositif (10) selon la revendication précédente, **caractérisé en ce que** le cliquet (62) est porté par une extrémité inférieure du manche (36), le cliquet (62) coopérant avec une crémaillère (66) qui est fixé à la base (18).

**9.** Dispositif (10) selon la revendication précédente, **caractérisé en ce que** des moyens de verrouillage de la commande de débrayage sont actionnables uniquement lorsque l'organe (58) élastique exerce une contrainte supérieure à une valeur prédéterminée.

**10.** Dispositif (10) selon la revendication précédente, **caractérisé en ce que** les moyens de verrouillage comportent une clé (94) qui est destinée à faire pivoter une roue (96), un doigt (102) de sécurité étant mobile entre une position de blocage dans laquelle il empêche la rotation de la roue (96) pour maintenir la clé (94) prisonnière, et une position de libération dans laquelle la clé (94) est libre d'être tournée et vers laquelle il est commandé lorsque le mors (60) est coulissé d'une distance prédéterminée par rapport au sabot (17) pour mettre en pression l'organe (58) compressible.

**11.** Dispositif (10) selon la revendication précédente, **caractérisée en ce que** le doigt (102) est rappelé élastiquement vers sa position de blocage.

**12.** Dispositif (10) selon la revendication précédente, **caractérisé en ce que** le doigt (102) est tiré vers sa position de libération par un câble (108) qui passe par un élément (112) de renvoi fixe par rapport au sabot (17), une première extrémité libre (114) du câble (108) étant fixe par rapport au mors (60).

**13.** Dispositif (10) selon la revendication précédente, **caractérisé en ce que** la deuxième extrémité libre (116) du câble (108) est fixée directement au doigt (102).

**14.** Dispositif (10) selon la revendication 10, **caractérisé en ce qu'**un capteur de position du mors par rapport au sabot (17) est susceptible d'émettre un signal électrique pour agir sur un actionneur de déplacement du doigt (102) entre ses deux positions.

**15.** Dispositif (10) selon l'une quelconque des revendications précédentes, **caractérisé en ce que** la base (18) est munie de roulettes (34A, 34B) escamotables entre une position escamotée de manière que la base (18) repose au sol par sa semelle (26) et dans laquelle les moyens (28, 30) d'agrippement sont actifs, et une position déployée dans laquelle la semelle (26) de la base (18) est surélevée par rapport au sol et dans laquelle les moyens (28, 30) d'agrippement sont inactifs.

**16.** Dispositif (10) selon la revendication précédente, **caractérisé en ce que** les roulettes (34A, 34B) permettent un roulement longitudinal de la base (18) par rapport au sol lorsqu'elles sont déployées.

**17.** Dispositif (10) selon la revendication précédente, **caractérisé en ce que** l'escamotage des roulettes (34A, 34B) est commandé par un manche (36) formant levier qui agit sur au moins une came (130), un suiveur de came (134) étant lié aux roulettes (34A, 34B).

**18.** Dispositif (10) selon la revendication précédente prise en combinaison avec l'une quelconque des revendications 7 ou 8, **caractérisé en ce que** l'escamotage des roulettes (34A, 34B) et le coulissement du mors (60) sont commandés par un manche (36) commun, la came (130) présentant une forme telle que les roulettes (34A, 34B) sont escamotées préalablement au serrage de l'organe (58) compressible.

**19.** Dispositif (10) selon l'une quelconque des revendications précédentes, **caractérisé en ce que** les moyens d'agrippement comportent :
- des crans (30) qui sont réalisés dans le sol ;
- des griffes (28) qui sont agencées sous la semelle (26) de la base (18) et qui sont destinées à coopérer avec les crans (30) pour immobiliser longitudinalement la base (18) dans au moins une direction opposée à la contrainte d'écartement susceptible d'être exercée par l'organe (58) compressible.
